# EUROPÄISCHE PATENTSCHRIFT

(11) **EP 2 163 802 B1**
(45) Veröffentlichungstag und Bekanntmachung des Hinweises auf die Patenterteilung: **02.10.2013**
(21) Anmeldenummer: 09168187.4
(22) Anmeldetag: 19.08.2009
(51) Int. Cl.: F16L 37/091, F16L 37/092

(54) **Außenabdichtender Steckverbinder**
Externally sealed plug connector
Connecteur à fiche étanche à l'extérieur

(30) Priorität: 20.08.2008 DE 102008038480
(43) Veröffentlichungstag der Anmeldung: 17.03.2010
(73) Patentinhaber: VIEGA GmbH & Co. KG, 57439 Attendorn (DE)
(72) Erfinder: Schreckenberg, Christoph, 57439, Attendorn (DE); Cyliax, Oliver, 57078, Siegen (DE)
(74) Vertreter: Cohausz & Florack

(56) Entgegenhaltungen:
- EP-A- 2 108 875
- WO-A-02/16817
- WO-A-02/070940
- CH-A- 442 899
- GB-A- 2 294 990

## Beschreibung

Die Erfindung betrifft einen Steckverbinder mit einem Grundkörper, mit einem Dichtelement, mit einem Fixiermittel zum Fixieren eines in den Steckverbinder eingeführten Rohres, wobei der Grundkörper an einer Seite eine Einführöffnung für die Einführung eines Rohres aufweist, wobei das Fixiermittel ein Schneidelement aufweist, wobei die Schneide des Schneidelements in die der Einführöffnung des Grundkörpers abgewandte Richtung weist.

Bei der Installation von Rohrleitungssystemen, beispielsweise bei gebäudetechnischer Wasserversorgung, müssen häufig Rohre mit weiteren Rohren, Ventilen, Verteilelementen usw. verbunden werden. Diese Verbindungen müssen zum einen dicht und sicher sein, zum anderen eine lange Haltbarkeit aufweisen, da das Austauschen von Verbindungen, insbesondere bei Unterputz-Rohrsystemen, einen hohen Arbeitsaufwand und hohe Kosten verursacht. Gleichzeitig soll eine solche Verbindung aber auch einfach und schnell zu installieren sein.

Im Stand der Technik sind dazu Verbindungselemente bekannt, mit denen Rohre dadurch verbunden werden, dass nach Einführen der Rohre in das Verbindungselement eine Kraft von außen auf das Verbindungselement aufgeübt wird und so die Verbindung von Rohr und Verbindungselement durch ein Verpressen erreicht wird.

Diese Verbindungselemente haben den Nachteil, dass ein zusätzliches Werkzeug zum Ausüben der Presskraft benötigt wird. Dies kann dazu führen, dass solche Verbindungselemente aufgrund des fehlenden Platzes für das zusätzliche Werkzeug nicht benutzt werden können.

Weiterhin sind im Stand der Technik Steckverbinder bekannt, bei denen ein Rohr in den Steckverbinder eingeführt wird und das Rohr durch Fixiermittel im Steckverbinder gehalten wird, ohne dass eine Verpressung des Steckverbinders und des Rohres von außen erfolgen muss. Zur Abdichtung der Verbindung wird im Stand der Technik häufig ein O-Ring als Dichtelement zwischen dem Steckverbinder und dem Rohr angeordnet. Zur Installation solcher Steckverbinder muss das Rohr zunächst abgelängt, entgratet, von außen angefast und im Bezug auf den Steckverbinder kalibriert werden, bevor es in den Steckverbinder eingeführt werden kann. Die Entgratung und Anfasung sind dabei erforderlich, damit das Dichtelement nicht durch die Kante des Rohrendes beschädigt oder aus der vorgesehenen Position herausgedrückt wird. Diese Steckverbinder haben somit den Nachteil, dass sie eine Vielzahl von Arbeitsschritten am Rohr erfordern, bevor das Rohr in den Steckverbinder eingeführt werden kann.

Diese Steckverbinder haben außerdem den Nachteil, dass sie eine weniger zuverlässige und weniger langfristige Dichtheit aufweisen als die mit verpressten Verbindungselementen erreichte Verbindung, da die Dichtelemente weniger stark zwischen Rohr und Steckverbinder verpresst, verspannt oder auf eine andere Art fixiert sind. Weiterhin wird das Rohr durch die Fixiermittel nur mäßig stabilisiert, so dass es vor allem bei Druckstößen im Rohr zu unerwünscht großen Verschiebungen zwischen Rohr und Steckverbinder kommen kann.

Im Stand der Technik sind weiterhin Steckverbinder bekannt, deren Fixiermittel in Richtung des Endes des eingeführten Rohres weisende Metallschneiden aufweisen, die in das Rohrmaterial einschneiden.

Diese Metallschneiden haben den Nachteil, dass sie bei starken Druckstößen und somit bei Bewegungen des Rohres im Steckverbinder immer tiefer in das Rohrmaterial einschneiden und so das Rohr lokal perforieren oder sogar abscheren können.

Zuvor beschriebene Steckverbinder sind aus dem Stand der Technik der GB 2 294 990 A bekannt, bei denen durch ein im Grundkörper angeordnetes Schneidelement eine bessere Fixierung des in den Steckverbinder eingeführten Rohres erreicht wird.

Aus der CH 442 899 ist ein Verbinder für Rohre mit einem Schneidelement oder alternativ mit einem Klemmelement bekannt.

Die WO 02/16817 A1 und die WO 02/070940 A1 offenbaren verbindungseinrichtungen für Schutzrohre mit einem Klemmelement ohne Schneidfunktion.

Der Erfindung liegt daher das technische Problem zu Grunde, einen Steckverbinder anzugeben, der eine zuverlässige Dichtheit und Langlebigkeit aufweist und bei dem die Installation des Steckverbinders vereinfacht und somit beschleunigt durchgeführt werden kann. Der Erfindung liegt außerdem das technische Problem zu Grunde, einen Steckverbinder anzugeben, bei dem das Rohr sicher im Steckverbinder fixiert ist und bei dem eine durch das Fixiermittel bedingte leckbildende Beschädigung des Rohres ausgeschlossen ist.

Zumindest eines der oben genannten technischen Probleme wird durch einen Steckverbinder gelöst, der durch die Merkmale des Anspruchs 1 dadurch gekennzeichnet ist, dass das Fixiermittel ein im Wesentlichen rotationssymmetrisches Klemmelement aufweist, dass auf der Innenseite des Klemmelements mindestens ein in die der Einführöffnung des Grundkörpers abgewandte Richtung weisender Zahn ausgebildet ist, dass das Schneidelement auf der der Einführöffnung des Grundkörpers abgewandten Seite des Klemmelements angeordnet ist, dass das Klemmelement eine schräge, in Richtung des Schneidelements weisende Anschlagfläche aufweist und dass das Schneidelement an dieser Anschlagfläche anliegt. Weitere vorteilhafte Ausgestaltungen sind in den Unteransprüchen angegeben.

Dadurch, dass das Klemmelement eine schräge, in Richtung des Schneidelements weisende Anschlagfläche aufweist und das Schneidelement an dieser Anschlagfläche anliegt, wird ein Verdrehen eines die Schneide aufweisenden Teils des Schneidelements nach innen verhindert, so dass das Schneidelement nur bis zu einer gewissen Tiefe in die Rohrwand einschneiden kann und eine Beschädigung oder ein Abscheren des Rohres verhindert wird. Dies ist insbesondere wichtig bei plötzlichen Druckstößen oder von außen aufgebrachten Stößen, die zu einer Relativbewegung zwischen dem Rohr und dem Steckverbinder führen.

Eine weitere vorteilhafte Ausführungsform wird dadurch erreicht, dass der Querschnitt des Schneidelementes eine abgewinkelte Form aufweist.

Durch diese Form des Schneidelementes wird eine Verdrehung des Schneidelements nach innen durch den daran anliegenden Vorsprung des Klemmelementes besonders wirkungsvoll verhindert. Weiterhin wird durch eine solche Form des Schneidelements das Schneidelement, insbesondere bei ruckartigen Relativbewegungen zwischen dem Rohr und dem Steckverbinder, besonders sicher an seinem vorgesehenen Platz neben dem Klemmelement gehalten. Das Schneidelement und das Klemmelement bleiben somit in Anlage zueinander.

Eine besonders bevorzugte Ausführungsform des Steckverbinders wird dadurch erreicht, dass die Schneide des Schneidelements als Schneiden auf radial verteilten Vorsprüngen ausgebildet ist.

Diese Ausführungsform hat den Vorteil, dass das Durchführen eines Rohres durch das Schneidelement vereinfacht wird, da in diesem Fall keine Dehnung des Materials des Schneidelementes, sondern nur ein Verbiegen der Vorsprünge erforderlich ist, um den Innenradius des Schneidelementes zu vergrößern. Weiterhin ist vorteilhaft, dass das Material des Schneidelementes bei der schrägen Ausrichtung der Schneide während des Herstellungsprozesses nicht gedehnt sondern nur gebogen bzw. gefalzt werden muss. Dadurch werden der Herstellungsprozess vereinfacht und Unregelmäßigkeiten des Materials durch eine Dehnung vermieden. Außerdem kann die Schneide auf den Vorsprüngen in einer vorteilhaften, zum Beispiel abgerundeten Formen ausgebildet werden.

Eine weitere vorteilhafte Ausführungsform des Steckverbinders wird dadurch erreicht, dass die Außenfläche des Klemmelements und die daran anliegende Innenfläche des Grundkörpers in die der Einführöffnung des Grundkörpers zugewandten Richtung weisende Verjüngungen aufweisen.

Diese Ausführungsform hat den Vorteil, dass das Klemmelement durch einen Formschluss mit dem Grundkörper an seiner vorgesehenen Position gehalten wird. Bei einer Relativbewegung, insbesondere bei einer ruckartigen Relativbewegung des Rohrendes gegenüber dem Grundkörper in Richtung der Einführöffnung des Grundkörpers wird das Klemmelement ggf. nach einer kleinen Relativbewegung in Richtung der Einführöffnung des Grundkörpers durch den Grundkörper in dem verjüngten Bereich zudem noch kraftschlüssig an seiner Position gehalten. Der radial nach innen gerichtete Teil der vom Grundkörper auf das Klemmelement im Bereich der Verjüngung übertragenen Kraft führt zudem zu einer Kompression des Klemmelementes, so dass der nach innen gerichtete mindestens eine Zahn des Klemmelementes stärker an das Rohr angedrückt wird und dieses somit stärker fixiert und der Relativbewegung entgegenwirkt.

Der zuvor erläuterte Steckverbinder kann dadurch weitergebildet werden, dass eine im Wesentlichen zylindersymmetrischen Vertiefung im Bereich zwischen der Lage des eingelassenen Dichtelements und der der Einführöffnung des Grundkörpers zugewandten Seite der Vertiefung mindestens teilweise eine geringere Tiefe aufweist als im Bereich der Lage des Dichtelements, wird erreicht, dass das Dichtelement bei Innendruckbeaufschlagung an seiner der Einführöffnung des Grundkörpers abgewandten Seite durch den Druck axial in einen Bereich der Vertiefung mit geringerer Tiefe bewegt und dabei in radialer Richtung komprimiert wird, wodurch sich der Anpressdruck des Dichtelementes auf den Grundkörper und auf die anliegende Rohrwand vergrößert, so dass der zwischen dem Grundkörper und dem eingeführten Rohr befindliche Spalt durch das Dichtelement mit im Vergleich zur vorherigen Lage erhöhtem Kraftschluss abgedichtet wird.

Unter Innendruckbeaufschlagung wird die Druckbeaufschlagung des Rohres durch das im Rohr geführte Medium verstanden.

Zylindersymmetrisch bezeichnet hier die Rotationssymmetrie um eine bestimmte Achse, wobei unter der bestimmten Achse die koaxiale Achse des in den Steckverbinder eingeführten Rohres verstanden wird. Diese Achse wird weiterhin auch als axiale Achse der Zylinderkoordinaten verstanden, auf die sich die im Folgenden verwendeten Begriffe "axial", "radial" und "azimutal" beziehen.

Eine weitere vorteilhafte Ausgestaltung des Steckverbinders ist dadurch gegeben, dass die Tiefe der Vertiefung von der der Einführöffnung abgewandten Seite zu der der Einführöffnung zugewandten Seite im Wesentlichen abnimmt.

Durch diese Ausgestaltung wird erreicht, dass das Dichtelement bei größerem Innendruckaufschlag auf der der Einführöffnung des Grundelementes abgewandten Seite durch eine entsprechend größere axiale Verschiebung entsprechend stärker radial komprimiert wird, so dass der bei größerem Druck für die Dichtheit erforderliche größere Kraftschluss zwischen Dichtelement, Grundkörper und am Dichtelement anliegender Rohrwand erreicht wird. Dadurch wird eine dauerhafte Verspannung des Dichtelementes auch bei Druckschwankungen ermöglicht.

Eine weitere vorteilhafte Ausbildungsform des Steckverbinders wird dadurch erreicht, dass der Querschnitt des Dichtelementes auf der der Einführöffnung des Grundkörpers abgewandten Seite eine im Wesentlichen konkave Form aufweist. Unter einer konkaven Form wird dabei eine Form verstanden, bei der die kürzeste Verbindungslinie zweier Randpunkte der Form außerhalb der Form verläuft.

Durch diese Ausgestaltung wird erreicht, dass die durch den auf der konkaven Seite beaufschlagten Druck auf das Dichtelement ausgeübte Kraft das Dichtelement zusätzlich in radialer Richtung gegen den Grundkörper und die anliegende Rohrwand presst.

Eine weitere bevorzugte Ausbildungsform des Steckverbinders wird dadurch erreicht, dass der Querschnitt des Dichtelementes im Wesentlichen eine Keil-ähnliche Form aufweist, wobei der in radialer Richtung schmalere Teil der Form auf der der Einführöffnung des Grundkörpers zugewandten Seite angeordnet ist.

Der Vorteil dieser Ausgestaltung liegt darin, dass die Form des Dichtelementes besser an die Form des Grundes der Vertiefung angepasst ist, so dass die an dem Grundkörper und an der Rohrwand anliegende Fläche des Dichtelementes erhöht wird. Ein weiterer Vorteil dieser Ausgestaltung besteht darin, dass sich durch die geringere Dicke des Dichtelementes auf der der Einführöffnung des Grundkörpers zugewandten Seite das Dichtelement auf dieser Seite leichter spreizen lässt und so das Einführen eines Rohres erleichtert wird.

Eine weitere bevorzugte Ausbildungsform des Steckverbinders wir dadurch erreicht, dass das Dichtelement mindestens eine nach innen gerichtete Anlagefläche aufweist, die schräg zur radialen Richtung verläuft.

Der Vorteil dieser Ausführungsform liegt darin, dass auch bei einer im Wesentlichen rechtwinkligen Schnittkante des einzuführenden Rohres eine radiale Kraft zur Spreizung des Dichtelements auftritt, so dass das Dichtelement beim Einführen eines solchen Rohres nicht aus der Vertiefung herausgedrückt werden kann. Dies ist ein wichtiger Vorteil verglichen mit dem bisherigen Stand der Technik, da eine Entgratung und Anfasung des abgelängten Rohres nicht mehr erforderlich ist. Dies führt zu einer Vereinfachung und zu einer Verkürzung des Installationsvorgangs.

Eine weitere bevorzugte Ausführungsform des Steckverbinders ist dadurch gegeben, dass die nach innen gerichtete Anlagefläche als eine nach innen gerichtete Lippe ausgebildet ist, die in die der Einführöffnung des Grundkörpers abgewandte Richtung weist.

Diese Ausführungsform ist vorteilhaft, da der erforderliche Kraftaufwand, um die Lippe bei der Einführung eines Rohres, insbesondere eines nicht entgrateten und angefasten Rohres, nach außen zu drücken und so die Durchführung des Rohres durch das Dichtelement zu ermöglichen, geringer ist, als der erforderliche Kraftaufwand zur Kompression des Dichtelementes, um eine vergleichbare Vergrößerung des Innendurchmessers des Dichtelementes zu erreichen. Weiterhin wirkt die durch das Einführen des Rohres ausgeübte Kraft im Wesentlichen auf die Lippe des Dichtelementes, so dass eine übermäßige Verschiebung des Dichtelementes beim Einführvorgang verhindert wird. Eine leichte Verschiebung des Dichtelementes ist jedoch möglich und sogar vorteilhaft, da so die zum Einführen des Rohres auf die Lippe ausgeübte Kraft verringert wird.

Die Ausbildung der nach innen gerichteten Anlagefläche als Lippe ist in besonders bevorzugter Weise mit der im Wesentlichen konkaven Form des Querschnittes des Dichtelementes auf der der Einführöffnung des Grundkörpers abgewandten Seite kombinierbar. So kann die konkave Form zum Teil durch die nach innen gerichtete Lippe gebildet werden, so dass beim Einführen des Rohres die Lippe nicht so stark komprimiert werden muss, sondern teilweise in den konkaven Bereich verbogen wird. Dadurch wird der für das Einführen notwendige Kraftaufwand verringert.

Eine weitere vorteilhafte Ausgestaltung des Steckverbinders wird dadurch erreicht, dass die dem Grund der Vertiefung zugewandte Seite des Dichtelements eine im Wesentlichen konvexe Form aufweist. Unter einer konvexen Form wird dabei eine Form verstanden, bei der die kürzeste Verbindungslinie zweier Randpunkte der Form in der Form verläuft.

Diese Ausgestaltung hat den Vorteil, dass das Dichtelement bei der Einführung eines Rohres derart verkippt wird, dass die Schnittkante des Rohrendes und die Anlagefläche des Dichtelementes an der Schnittkante des Rohrendes in einem flacheren Winkel zueinander liegen. Dadurch wird der für die Durchführung des Rohrendes durch das Dichtelement erforderliche Kraftaufwand verringert und die Gefahr, dass das Dichtelement aus seiner Position heraus gedrückt wird, weiter reduziert.

In einer besonders bevorzugten Ausführungsform des Steckverbinders weist die dem Grund der Vertiefung zugewandte Seite des Dichtelements mindestens zwei Flächen auf, die schräg zueinander liegen.

Der Vorteil dieser Ausführungsform liegt darin, dass das Dichtelement beim Einführungsvorgang des Rohres definiert bei einer bestimmten Einführungstiefe um einen definierten Winkel verkippt, so dass der Winkel zwischen der Schnittkante des Rohrendes und der Anlagefläche des Dichtelementes an der Schnittkante des Rohrendes definiert verkleinert werden kann.

Bei dem zuvor erläuterten Steckverbinder wird neben den oben erläuterten Vorteilen der Synergieeffekt erreicht, dass die durch eine Innendruckbeaufschlagung verschobene Lage des Dichtelementes in einen Bereich der Vertiefung mit geringerer Tiefe und die somit erzielte zuverlässigere und längerfristige Dichtheit auch bei wechselnder Stärke des Drucks erhalten bleibt, da druckinduzierte Relativbewegungen zwischen dem Rohr und dem Grundkörper, die die Lage des Dichtelementes verschieben können, durch die Fixiermittel weitgehend ausgeschlossen werden.

Weitere Merkmale und Vorteile der vorliegenden Erfindung werden in der Beschreibung der Ausführungsbeispiele näher erläutert, wobei auf die beigefügte Zeichnung Bezug genommen wird. In der Zeichnung zeigen
- Fig. 1: ein Ausführungsbeispiel eines erfindungsgemäßen Steckverbinders im Querschnitt mit einem Grundkörper, wobei der Grundkörper eine separate Hülse aufweist, einem Dichtelement und einem Fixiermittel, bestehend aus einem Klemmelement und einem Schneidelement,
- Fig. 2a: das ringförmige Dichtelement aus Fig. 1 in Draufsicht,
- Fig. 2b: das ringförmige Dichtelement aus Fig. 1 im Querschnitt,
- Fig. 2c: eine Detailansicht des Dichtelementes aus Fig. 1 im Querschnitt,
- Fig. 3a-f: weitere Ausführungsbeispiele des Dichtelementes und der das Dichtelement aufnehmenden Vertiefung im Grundkörper im Querschnitt,
- Fig. 4a-c: die Vertiefung und das Dichtelement aus Fig. 1 im Querschnitt, und zwar vor Einführung des Rohres, nach Einführung des Rohres und nach Druckbeaufschlagung,
- Fig. 5a: das ringförmige Schneidelement aus Fig. 1 in Draufsicht,
- Fig. 5b: das ringförmige Schneidelement aus Fig. 1 im Querschnitt,
- Fig. 5c: eine Detailansicht des ringförmigen Schneidelementes im Querschnitt,
- Fig. 6a: das Klemmelement aus Fig. 1 in Draufsicht,
- Fig. 6b: das Klemmelement aus Fig. 1 im Querschnitt,
- Fig. 6c: eine alternative Ausgestaltung des Klemmelements aus Fig. 1 im Querschnitt und
- Fig. 6d: eine erfindungsgemäße Anordnung des Klemmelementes und des Schneidelementes in einem Steckverbinder.

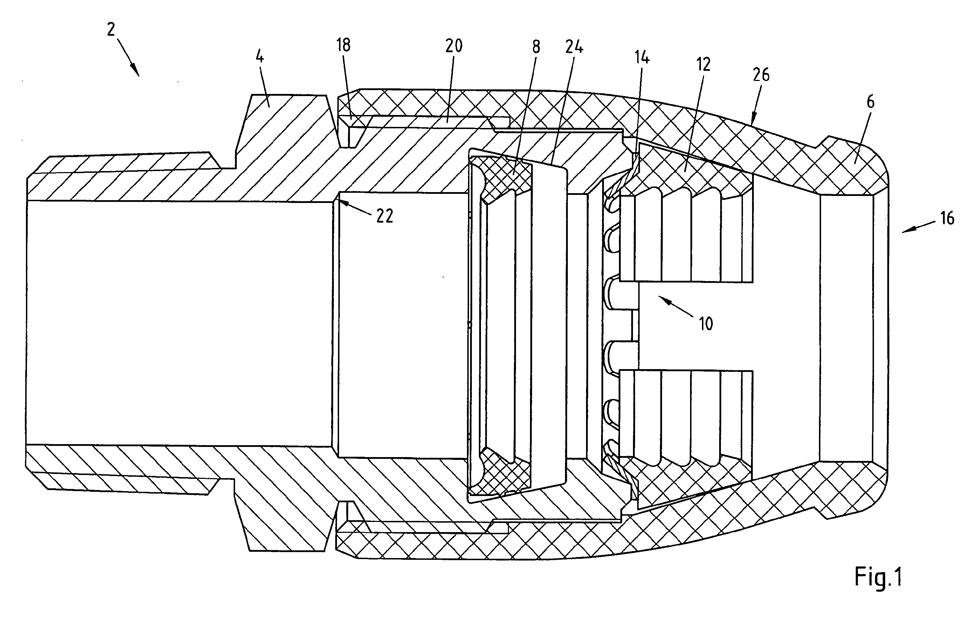

Fig. 1 zeigt ein Ausführungsbeispiel eines erfindungsgemäßen Steckverbinders 2 im Querschnitt mit einem zweiteiligen Grundkörper, der aus einem Innenkörper 4 und einer separaten Hülse 6 besteht, mit einem Dichtelement 8 und mit einem Fixiermittel 10, bestehend aus einem Klemmelement 12 und einem Schneidelement 14. Der Grundkörper 4,6 weist auf der einen Seite eine Einführöffnung 16 auf, die sich bei diesem Ausführungsbeispiel im Bereich der Hülse 6 befindet und die in ihrem inneren Querschnitt im Wesentlichen dem Außenquerschnitt des einzuführenden Rohres entspricht. Die Hülse 6 weist ein inneres Gewinde 18 auf und ist mit dem Innenkörper 4 des Grundkörpers, der ein entsprechendes äußeres Gewinde 20 aufweist, verschraubt. Alternativ können die Hülse 6 und der Innenkörper 4 auch verstiftet, geklipst oder auf eine andere Weise lösbar oder nicht lösbar miteinander verbunden sein. Der Innenkörper 4 weist eine Anschlagfläche 22 auf, die mit dem Ende eines eingeführten Rohres in Anschlag kommt und somit die Einführtiefe des Rohres definiert. Die Hülse 6 weist dabei eine Länge auf, die der Einführtiefe des Rohres entspricht, so dass das der Einführöffnung 16 entgegen gesetzte Ende der mit dem Innenkörper 4 verbundenen Hülse 6 in axialer Richtung mit der Position der Anschlagfläche 22 übereinstimmt. Dies hat den Vorteil, dass die Einstecktiefe des Rohres vor dem Einführen sehr einfach durch das Abtragen einer Länge der Hülse 6 vom Ende des einzuführenden Rohres bestimmt werden kann. Dies ermöglicht insbesondere ein besonders schnelles Ablängen des Rohres. Im Innenkörper 4 ist weiterhin eine Vertiefung 24 vorgesehen, deren Tiefe von der der Einführöffnung 16 abgewandten Seite zu der der Einführöffnung 16 zugewandten Seite gleichmäßig abnimmt. In der Vertiefung 24 ist das Dichtelement 8 angeordnet. Auf der der Einführöffnung zugewandten Seite des Dichtelementes 8 ist das Schneidelement 14 und das sich konisch verjüngende Klemmelement 12 angeordnet. Die Hülse 6 weist im Bereich des Klemmelementes 12 eine dem Klemmelement 12 entsprechende konische Verjüngung 26 auf. Eine detaillierte Beschreibung der einzelnen Komponenten und deren Funktion ist den im Folgenden beschriebenen Abbildungen zu entnehmen.

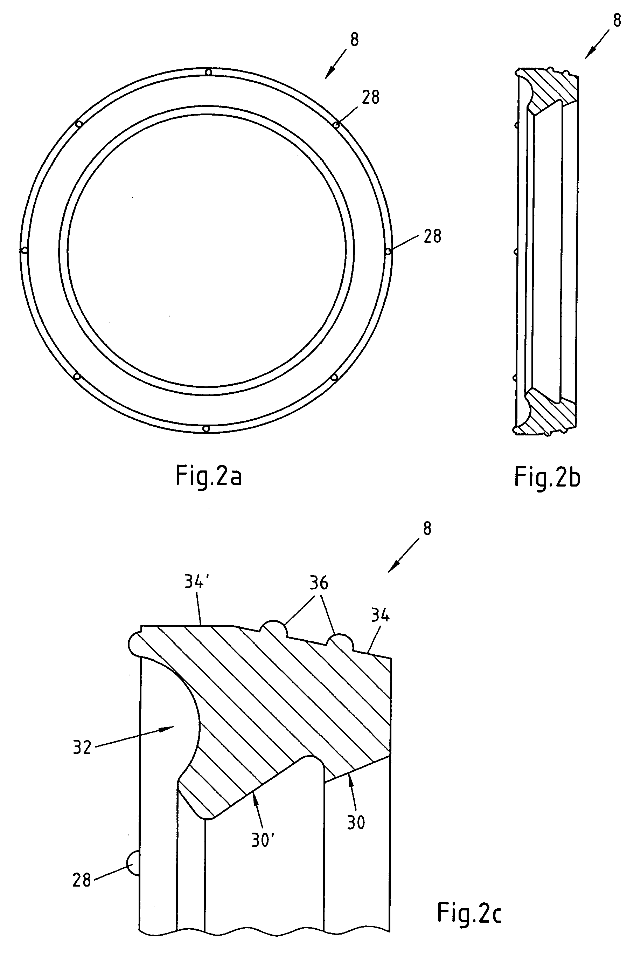

Fig. 2a und Fig. 2b zeigen einen Längs- und einen Querschnitt des in Fig. 1 dargestellten ringförmigen Dichtelements 8. Das Dichtelement weist auf dem Umfang verteilte Vorsprünge 28 auf, die als Abstandhalter zwischen dem Dichtelement 8 und dem Rand der Vertiefung 24 dienen, so dass das im Rohr geführte Medium bei einer Innendruckbeaufschlagung in den Bereich zwischen dem Rand der Vertiefung 24 und dem Dichtelement 8 gelangen kann.

Fig. 2c zeigt eine Detailansicht des Dichtelements 8 im Querschnitt. Der Querschnitt des Dichtelements 8 weist eine Keil-ähnliche Form auf. Auf der Innenseite sind zwei Lippen 30 und 30' ausgebildet. Auf der der Einführöffnung abgewandten Seite des Dichtelementes 8 ist eine Vertiefung 32 ausgebildet, so dass diese Seite des Dichtelementes 8 eine konkave Form aufweist. Die der Vertiefung 24 des Innenkörpers 4 zugewandte Seite des Dichtelementes 8 weist zwei Flächen 34 und 34' auf, die in einem Winkel zueinander liegen und das Kippen des Dichtelements 8 von der Anlage der Fläche 34 zur Anlage der Fläche 34' an die Vertiefung 24 ermöglichen. Alternativ ist auch eine Ausbildung der der Vertiefung 24 des Innenkörpers 4 zugewandten Seite des Dichtelementes 8 als gerade konische Fläche denkbar. An der Fläche 34 sind weiterhin Erhebungen 36 vorgesehen, die die Verkippung des Dichtelementes 8 weiter erleichtern.

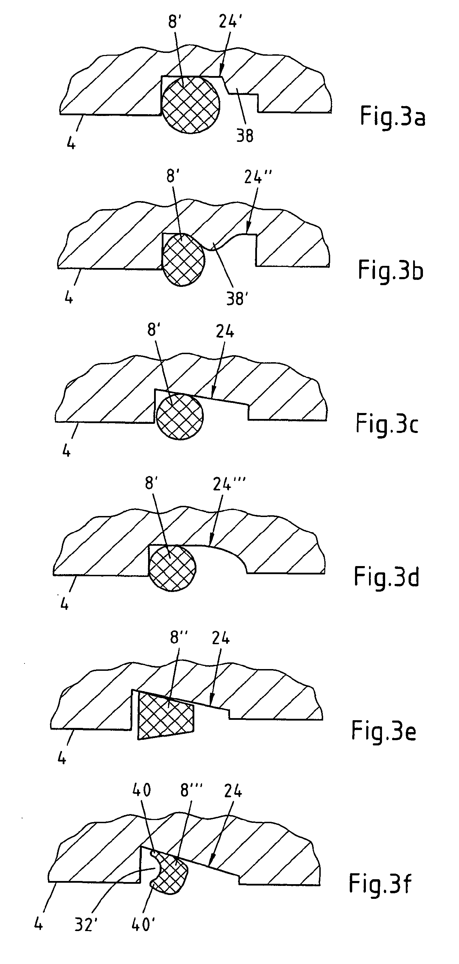

In den Fig. 3a bis 3f sind Ausführungsformen der Vertiefung 24, 24', 24'', 24''' des Innenkörpers 4 dargestellt, sowie Ausführungsformen des Dichtelements 8', 8'', 8'''. Die nicht gezeigte Einführöffnung 16 des Grundkörpers 4,6 ist jeweils auf der rechten Seite angeordnet.

Die in den Fig. 3a und 3b gezeigten Ausführungsbeispiele der Vertiefung 24', 24'' weisen Erhebungen 38, 38' auf, die den Innenradius des Innenkörpers 4 im Bereich der Vertiefung abschnittsweise verjüngen. Das links der Erhebung 38, 38' angeordnete Dichtelement 8' wird so bei einer Bewegung nach rechts gestaucht, so dass sich der Druck des Dichtelements 8' auf den Grund der Vertiefung 24', 24'' und auf die Wand des von rechts in den Grundkörper (4,6) eingeführten Rohres (nicht gezeigt) erhöht.

Die in den Fig. 3c und 3d gezeigten Ausführungsbeispiele der Vertiefung 24, 24''' zeigen eine ebene und eine gekrümmte Verflachung der Vertiefung 24, 24''' von links nach rechts. Das auf der linken Seite der Vertiefung 24, 24''' eingebrachte Dichtmittel 8' wird so insbesondere bei der durch eine (linksseitige) Innendruckbeaufschlagung auf das Dichtmittel 8' induzierten Bewegung nach rechts kontinuierlich gestaucht. Dies führt zu einer stetigen Erhöhung des Anpressdrucks des Dichtelements 8' auf den Grund der Vertiefung 24, 24''' und auf die Wand des eingeführten Rohres (nicht gezeigt) bei einer Erhöhung des linksseitigen Druckaufschlags auf das Dichtelement 8'. Mit der graduellen Verringerung des Innenradius des Grundkörpers im Bereich der Vertiefung 24, 24''' wird somit erreicht, dass das Dichtelement 8' den Steckverbinder auch bei verschiedenen beaufschlagten Drücken zuverlässig abdichtet.

In den Fig. 3e und 3f sind Ausführungsbeispiele des Dichtelements 8'', 8''' dargestellt. In der Fig. 3e ist das Dichtelement 8'' in einer Keil-artigen Form ausgebildet. Diese Form ist in vorteilhafter Weise an die Form der Vertiefung 24 angepasst. Die Kontaktfläche zwischen dem Dichtelement 8'' und dem Grund der Vertiefung 24 ist somit vergrößert, so dass die Dichtheit der Verbindung zuverlässiger und langfristiger ist. In der Fig. 3f ist auf der linken Seite des Dichtelements 8'' eine Vertiefung 32' eingelassen, so dass das Dichtelement 8''' eine konkave Form aufweist, die durch zwei Lippen 40 und 40' begrenzt wird. Bei einer linksseitigen Druckbeaufschlagung des Dichtelements 8''' werden die Lippen des Dichtelement 8''' gegen den Grund der Vertiefung 24 bzw. gegen die Wand des Rohres (nicht gezeigt) gedrückt, so dass das den Druckaufschlag bewirkende Medium nicht zwischen die Anlagefläche des Dichtelements 8''' und der Vertiefung 24 bzw. des Rohres gelangen kann. Diese Form des Dichtelementes 8''' begünstigt auch die durch die Druckbeaufschlagung bewirkte nach rechts wirkende Kraft auf das Dichtelement 8'''.

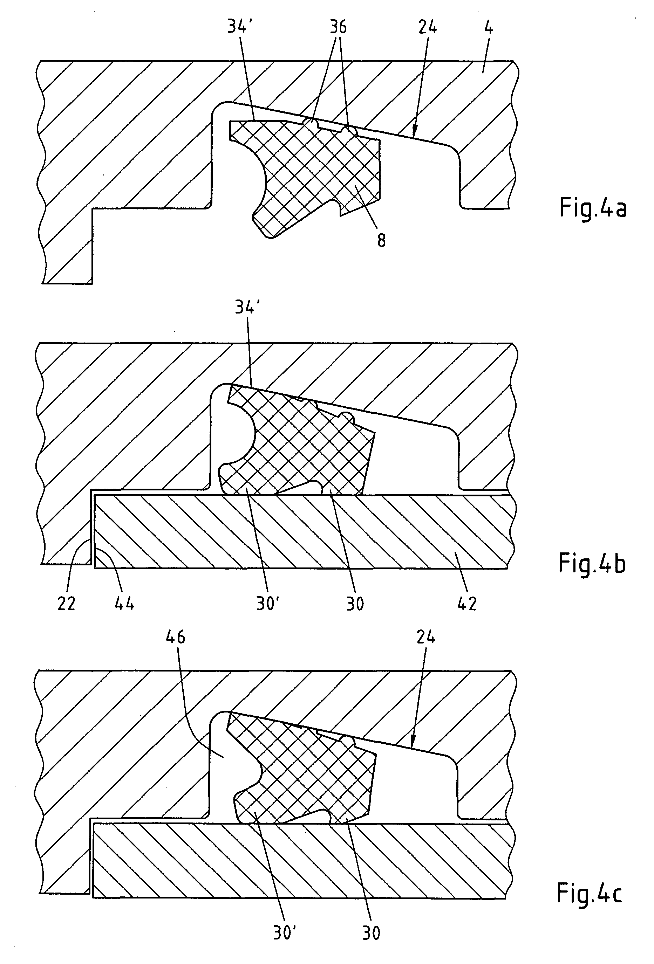

Die Fig. 4a-c dienen der Veranschaulichung der Veränderungen der Lage und der Form des Dichtelements 8 aus Fig. 1 bei Einführung des Rohres und der (linksseitigen) Innendruckbeaufschlagung.

In Fig. 4a ist das in die Vertiefung 24 des Innenkörpers 4 eingelassene Dichtelement 8 im Ausgangszustand, d.h. vor einer Einführung eines Rohres in den Grundkörper 4,6, dargestellt. Die Vorsprünge 36 des Dichtelements 8 sind mit dem Grund der Vertiefung 24 in Anlage gebracht.

Fig. 4b zeigt das Dichtelement 8 in der Vertiefung 24 nach Einführung des Rohres 42. Das Rohr 42 ist so weit eingeführt, dass die Kante 44 des Rohres 42 mit der Anlagefläche 22 des Innenkörpers 4 in Anlage gebracht ist. Bei dem Einführungsvorgang des Rohres 42 ist die Kante 44 des Rohres 42 mit den Lippen 30, 30' des Dichtelementes 8 vorübergehend in Anlage gekommen, so dass das Dichtelement 8 verkippt und die Fläche 34' mit dem Grund der Vertiefung 24 in Anlage gebracht worden ist. Die Lippen 30, 30' und der gesamte Querschnitt des Dichtelementes 8 sind in Fig. 4b radial gestaucht, so dass das Dichtelement 8 an der Fläche 34' und an den Lippen 30, 30' eine Kraft auf den Grund der Vertiefung 24 und die Wand des Rohres 42 ausübt.

Fig. 4c zeigt die Anordnung aus Fig. 4b nach einer (linksseitigen) Innendruckbeaufschlagung von beispielsweise 5 bar. Das in dem Rohr 42 geführte druckaufweisende Medium dringt durch den Spalt zwischen der Anlagefläche 22 des Innenkörpers 4 und der Kante 44 des Rohres 42 in den links des Dichtelementes 8 ausgebildeten Raum 46 der Vertiefung 24. Dadurch wirkt von der linken Seite ein Druck auf das Dichtelement 8. Das Dichtelement 8 ist durch die vom Druck ausgeübte Kraft nach rechts versetzt worden, so dass es durch die Verjüngung der Vertiefung 24, insbesondere im Bereich der Lippe 30', radial komprimiert ist. Dadurch ist die vom Dichtelement 8 auf den Grund der Vertiefung 24 und die Wand des Rohrs 42 ausgeübte Kraft erhöht und so die Dichtheit der Steckverbindung auch bei erhöhtem Druck gewährleistet.

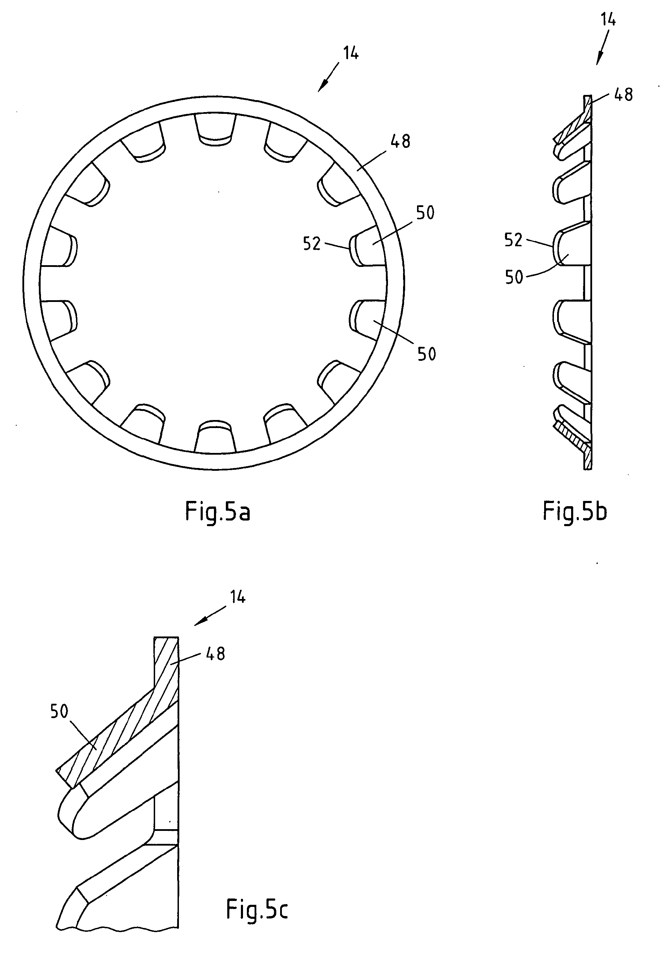

Fig. 5a und Fig. 5b zeigen einen Längs- und einen Querschnitt des in Fig. 1 dargestellten ringförmigen Schneidelements 14. Das Schneidelement weist einen äußeren geschlossenen Ring 48 auf, der der Stabilität und der sicheren Positionierung des Schneidelements im Grundkörper 4,6 dient. Im Prinzip kann statt einem Ring auch ein geschlitzter Ring, d.h. ein C-Ring verwendet werden. Auf dem Ring 48 sind nach innen schräge Vorsprünge 50 angeordnet, die jeweils eine in azimutaler Richtung gerundete Schneide 52 aufweisen.

In Fig. 5c ist ein vergrößerter Ausschnitt des Querschnitts aus Fig. 5b gezeigt. Die abgewinkelte Form des Schneidelements durch den radial ausgerichteten Ring 48 und den nach innen weisenden schrägen Vorsprung 50 ist hier deutlich erkennbar.

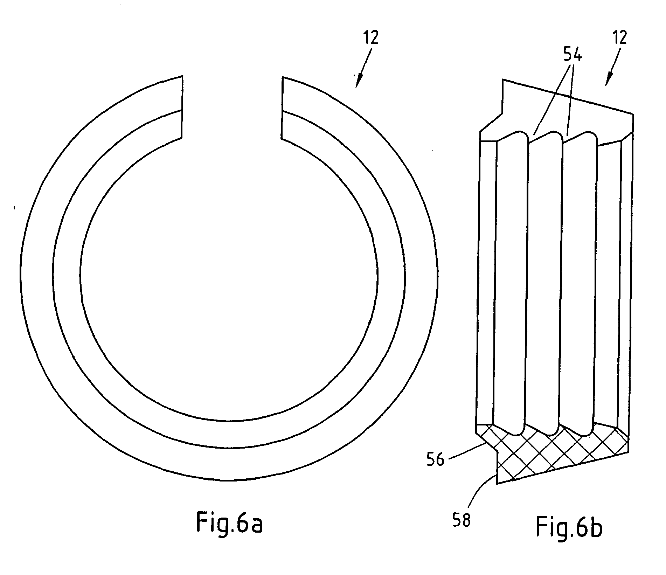

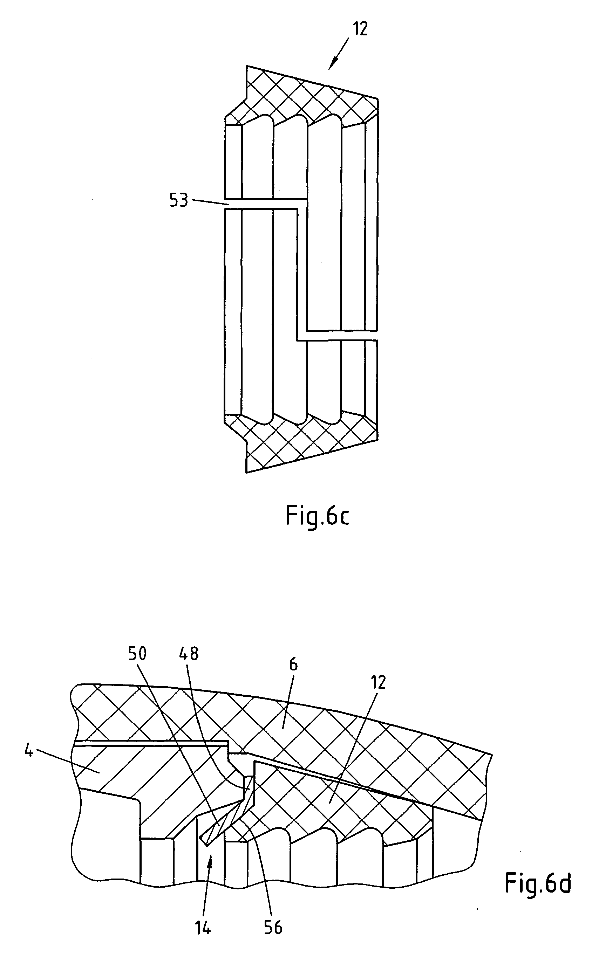

Fig. 6a und Fig. 6b zeigen eine Draufsicht und einen Querschnitt des in Fig. 1 dargestellten Klemmelements 12. Das Klemmelement 12 ist C-Ring-förmig ausgebildet, eine Ausbildung als geschlossener, komprimierbarer Ring ist aber ebenfalls denkbar. Alternativ kann das Klemmelement auch wie in Fig. 6c gezeigt mit einem Z-förmigen Schlitz 53 versehen sein. Der äußere Querschnitt des Klemmelements 12 weist eine konische Verjüngung auf. Auf der Innenseite des Klemmelements 12 sind in Richtung der nicht-verjüngten Seite des Klemmelements weisende Zähne 54 ausgebildet. An der nicht-verjüngten Seite des Klemmelements 12 ist außerdem eine Anlagefläche 56 vorgesehen, die zusammen mit der angrenzenden Fläche 58 des Klemmelementes 12 eine abgewinkelte Form bildet.

In Fig. 6d ist die Anordnung des Schneidelementes 14 und des Klemmelementes 12 im Grundkörper 4,6 aus Fig. 1 dargestellt. In den zwischen dem Innenkörper 4 und dem Klemmelement 12 gebildeten Spalt ist der Ring 48 des Schneidelements 14 angeordnet, so dass das Schneidelement sicher an seiner Position im Grundkörper 4,6 fixiert ist. Die Vorsprünge 50 des Schneidelements 14 sind mit der Anlagefläche 56 des Klemmelements 12 in Anlage gebracht. Ein Verbiegen bzw. Umklappen der Vorsprünge und somit eine Beschädigung der Wand eines eingeführten Rohres bei Bewegungen des eingeführten Rohres relativ zum Steckverbinder wird dadurch zuverlässig unterbunden.

## Patentansprüche

1. Steckverbinder, insbesondere zum Verbinden von Rohren,
- mit einem Grundkörper (4,6),
- mit einem Dichtelement (8),
- mit einem Fixiermittel (10) zum Fixieren eines in den Steckverbinder (2) eingeführten Rohres,
- wobei der Grundkörper (4,6) an einer Seite eine Einführöffnung (16) für die Einführung eines Rohres aufweist,
- wobei das Fixiermittel (10) ein Schneidelement (14) aufweist und
- wobei die Schneide (52) des Schneidelements (14) in die der Einführöffnung (16) des Grundkörpers (4,6) abgewandte Richtung weist,
**dadurch gekennzeichnet,**
- **dass** das Fixiermittel ein im Wesentlichen rotationssymmetrisches Klemmelement (12) aufweist,
- **dass** auf der Innenseite des Klemmelements (12) mindestens ein in die der Einführöffnung (16) des Grundkörpers (4,6) abgewandte Richtung weisender Zahn (54) ausgebildet ist,
- **dass** das Schneidelement (14) auf der der Einführöffnung (16) des Grundkörpers (4,6) abgewandten Seite des Klemmelements (12) angeordnet ist,
- **dass** das Klemmelement (12) eine schräge, in Richtung des Schneidelements (14) weisende Anschlagfläche (56) aufweist und
- **dass** das Schneidelement (14) an dieser Anschlagfläche (56) anliegt.

2. Steckverbinder nach Anspruch 1,
**dadurch gekennzeichnet,**
**dass** der Querschnitt des Schneidelementes (14) eine abgewinkelte Form aufweist.

3. Steckverbinder nach einem der Ansprüche 1 bis 2,
**dadurch gekennzeichnet,**
**dass** die Schneide (52) des Schneidelements (14) auf radial verteilten Vorsprüngen (50) ausgebildet ist.

4. Steckverbinder nach Anspruch 1,
**dadurch gekennzeichnet,**
**dass** die Außenfläche des Klemmelements (12) und die daran anliegende Innenfläche des Grundkörpers (4,6) in die der Einführöffnung (16) des Grundkörpers (4,6) zugewandten Richtung weisende Verjüngungen (26) aufweisen.

5. Steckverbinder nach Anspruch 3,
**dadurch gekennzeichnet,**
**dass** die Schneiden auf den Vorsprüngen eine abgerundete Form aufweisen.

6. Steckverbinder nach einem der Ansprüche 1 bis 5,
**dadurch gekennzeichnet,**
**dass** das Schneidelement einen als C-Ring ausgebildeten äußeren Ring aufweist.

7. Steckverbinder nach einem der Ansprüche 1 bis 6,
**dadurch gekennzeichnet,**
**dass** das Klemmelement einen Z-förmigen Schlitz aufweist.

## Claims

1. Connector, particularly for connecting pipes,
- with a base body (4,6),
- with a sealing element (8),
- with a fixing means (10) for fixing a pipe inserted into the connector (2),
- wherein the base body (4,6) has an insertion opening (16) on one side for the insertion of a pipe,
- wherein the fixing means has a cutting element (14),
- wherein the cutting edge (52) of the cutting element (14) points in the direction facing away from the insertion opening (16) of the base body (4,6),
**characterised**
- **in that** the fixing means (10) has an essentially rotationally symmetrical clamping element (12),
- **in that** at least one tooth (54) pointing in a direction facing away from the insertion opening (16) of the base body (4,6) is formed on the inner side of the clamping element (12),
- **in that** the cutting element (14) is arranged on the side of the clamping element (12) facing away from the insertion opening (16) of the base body (4,6),
- **in that** the clamping element (12) has an angled stop surface (56) pointing in the direction of the cutting element (14) and
- **in that** the cutting element (14) bears against this stop surface (56).

2. Connector according to Claim1,
**characterised in that** the cross section of the cutting element (14) has an angled shape.

3. Connector according to one of Claims 1 to 2,
**characterised in that** the cutting edge (52) of the cutting element (14) is constructed on radially distributed projections (50).

4. Connector according to Claim 1,
**characterised in that** the outer surface of the clamping element (12) and the inner surface of the base body (4,6) bearing against it have tapers (26) pointing in the direction facing the insertion opening (16) of the base body (4,6).

5. Connector according to Claim 3,
**characterised in that** the cutting edges on the projections are constructed in a rounded shape.

6. Connector according to one of Claims 1 to 5,
**characterised in that** the cutting element has an outer ring, which is formed as C ring.

7. Connector according to one of Claims 1 to 6,
**characterised in that** the clamping element is provided with a Z-shaped slot.

## Revendications

1. Raccord enfichable, destiné, en particulier, à relier des tubes,
- avec un corps de base (4, 6),
- avec un élément d'étanchéité (8),
- avec un moyen de fixation (10) pour la fixation d'un tube, inséré dans le raccord enfichable (2),
- sachant que le corps de base (4, 6) est doté, sur un côté, d'une ouverture d'insertion (16) pour l'introduction d'un tube,
- sachant que le moyen de fixation (10) est doté d'un élément de coupe (14) et
- sachant que le tranchant (52) de l'élément de coupe (14) est orienté dans la direction opposée à l'ouverture d'insertion (16) du corps de base (4, 6),
**caractérisé en ce que**
- le moyen de fixation est doté d'un l'élément de serrage (12) sensiblement symétrique en rotation,
- au moins une dent (54), orientée dans la direction opposée à l'ouverture d'insertion (16) du corps de base (4, 6), est formée sur la face intérieure de l'élément de serrage (12),
- l'élément de coupe (14) est disposé sur la face de l'élément de serrage (12), qui est orientée à l'opposé de l'ouverture d'insertion (16) du corps de base (4, 6),
- l'élément de serrage (12) est doté d'une surface de butée (56) chanfreinée, orientée dans la direction de l'élément de coupe (14) et
- l'élément de coupe (14) s'appuye contre cette surface de butée (56).

2. Raccord enfichable selon la revendication 1, **caractérisé en ce que** la section transversale de l'élément de coupe (14) présente une forme coudée.

3. Raccord enfichable selon l'une des revendications 1 à 2, **caractérisé en ce que** le tranchant (52) de l'élément de coupe (14) est formé sur des saillies (50), réparties radialement.

4. Raccord enfichable selon la revendication 1, **caractérisé en ce que** la surface extérieure de l'élément de serrage (12) et la surface intérieure du corps de base (4, 6) adjacente sont dotées d'amincissements (26), qui sont orientés dans la direction de l'ouverture d'introduction (16) du corps de base (4, 6).

5. Raccord enfichable selon la revendication 3, **caractérisé en ce que** les tranchants sur les saillies présentent une forme arrondie.

6. Raccord enfichable selon l'une des revendications 1 à 5, **caractérisé en ce que** l'élément de coupe est doté d'une bague extérieure, réalisée en forme de C.

7. Raccord enfichable selon l'une des revendications 1 à 6, **caractérisé en ce que** l'élément de serrage est doté d'une fente en forme de Z.
